# EUROPEAN PATENT APPLICATION

(11) **EP 2 716 535 A2**
(43) Date of publication of application: **09.04.2014**
(21) Application number: 13180580.6
(22) Date of filing: 15.08.2013
(51) Int. Cl.: B62K 21/16

(54) **Bicycle stem**

(30) Priority: 16.08.2012 HK 12108060
(71) Applicant: Neil Pryde Limited, New Territories, Hong Kong (CN)
(72) Inventor: Pryde, Michael, Tuen Mun, New Territories (HK)
(74) Representative: Stevenson-Hill, Jack Patrick

(57) **Abstract**

A bicycle stem (20) has a steering tube clamp (20) with a bore for receiving a steer tube (11) and a pair of parallel spaced arms (25A, 25B) each having an elongate slot (27A, 27) at a distal end (28). An extension (23) has a proximal end receivable between the pair of parallel spaced arms (25A, 25B)and a bore (41) extending transversely through its proximal end. A pin (34), in use, extends through the elongate slot (27A, 27B) in each arm (25A, 25) and through the bore (41) in the extension (23) for securing the extension (23) to the steering tube clamp (20). The pin (34), the elongated slots (27A, 27B) and the bore (41) are in non-rotational engagement to prevent in use rotation of the extension (23)relative to the steering tube clamp (22), and the pin (34) is selectively movable longitudinally within the elongated slots (27A, 27B) for adjusting a reach of the extension (23).

## Description

### Field of the Invention

The current invention relates to bicycles and in particular to an adjustable stem for a bicycle.

### Background to the invention

A bicycle frame and components are adjustable to fit a particular rider. The bicycle seat height can be adjusted for the correct pedaling geometry of the rider. The rider's reach from the seat to the handlebars is important for the correct riding position, balance and steering/bicycle control. Reach can be adjusted via the length of the stem connecting the handlebars to the steering tube. It is desirable for the stem to be easily or readily adjustable for setting the correct riding position in combination with the seat height.

### Summary of the Invention

According to a first aspect of the invention there is provided a bicycle stem comprising a steering tube clamp, the steering tube claim having a bore for receiving a steer tube and a pair of parallel spaced arms, each arm having an elongate slot at a distal end, an extension having a proximal end receivable between the arms and a bore extending transversely through the proximal end, and a pin which in use extends through the elongate slot in each arm and through the bore in the extension for securing the extension to the steering tube clamp, the pin slots and bore being in non-rotational engagement to prevent in use rotation of the extension relative to the clamp, and the pin being selectively movable longitudinally within the slots for adjusting a reach of the extension.

Preferably the bicycle stem further includes a pair of interchangeable spacer disks each having an aperture, the spacer disks cooperating with respective arms and the pin for selectively locating the pin at a longitudinal position within the slots.

Preferably the spacer disks are removably received within recesses of respective arms.

Preferably the pin includes a pin sleeve about the pin, the pin sleeve being in the non-rotational engagement with the slots and bore and selectively movable longitudinally within the slots.

Preferably the slots and bore have an inner non-circular shape, and the pin sleeve has an outer non-circular shape for non-rotational engagement with the slots and bore.

Preferably the non-circular shape is square.

Preferably the pin sleeve has a circular aperture and the pin is circular for engagement through the pin sleeve.

Preferably the bicycle stem further includes an extension sleeve removably received in the bore, the extension sleeve have an aperture for receiving the pin though the extension sleeve within the bore.

Preferably the extension sleeve and bore are splined for engagement of the extension sleeve and bore at one of a plurality of rotational positions.

Preferably the bicycle stem includes a set of two or more pairs of spacer disks, each pair of spacer disks within the set having apertures at different locations, the pairs of spacer disks in the set being interchangeable for selectively locating the pin at different longitudinal positions within the slots.

According to a second aspect of the invention there is provided a bicycle stem comprising a steering tube clamp, the steering tube claim having a bore for receiving a steer tube and a pair of parallel spaced arms, each arm having an elongate slot at a distal end, an extension having a proximal end receivable between the arms and a bore extending transversely through the proximal end, and a pin which in use extends through the elongate slot in each arm and through the bore in the extension for securing the extension to the steering tube clamp, the pin slots and bore being in non-rotational engagement to prevent in use rotation of the extension relative to the clamp, and the pin being selectively movable longitudinally within the slots for adjusting a reach of the extension, and a set of two or more pairs of spacer disks, each pair of spacer disks within the set having apertures at different locations, the pairs of spacer disks in the set interchangeably cooperating with respective arms and the pin for selectively locating the pin at different longitudinal positions within the slots.

### Brief Description of the Drawings

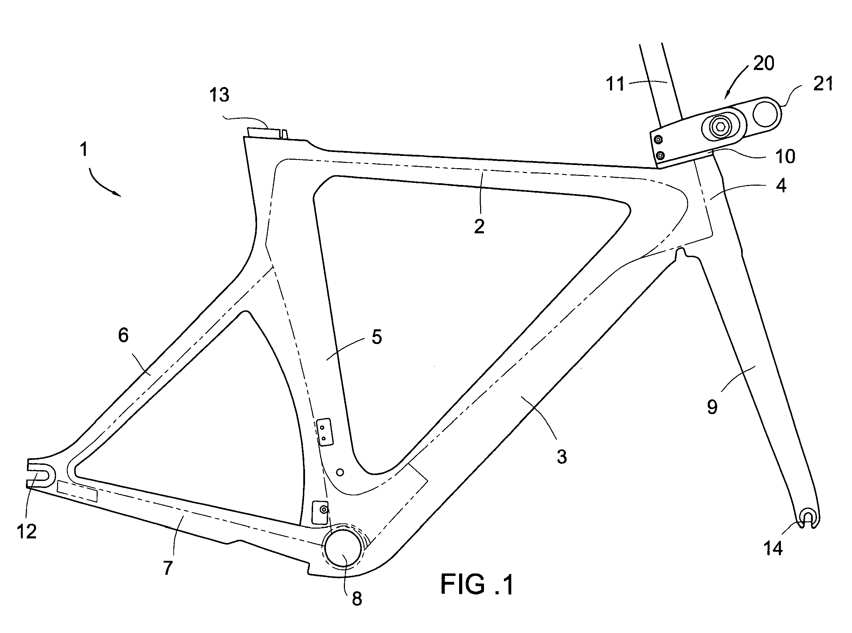

The invention will be described with reference to the accompanying drawings in which:-
Figure 1 is a schematic illustration of a bicycle frame including a stem according to the invention,
Figure 2 is an exploded schematic illustration of stem,
Figure 3 is a first schematic illustration of the bicycle frame head set and stem in a shorter reach configuration,
Figure 4 is a second schematic illustration of the bicycle frame head set and stem in an intermediate reach configuration, and
Figure 5 is a third schematic illustration of the bicycle frame head set and stem in a longer reach configuration.

### Description of the Preferred Embodiments

Referring to the drawings bear is shown a bicycle frame 1 with a bicycle stem 20 according to the invention. The bicycle frame 1 comprises a top tube 2 and down tube 3 connected by a head tube 4 and seat tube 5 in known manner. A bottom bracket 8 is located at the junction of the seat tube 5 and down tube 3. Extending rearwardly of the bottom bracket 8 to the rear dropout 12 is a chain stay 7. A seat stay 6 extends from the rear dropout 12 upwardly at an angle towards and upper end of the seat tube 5. A steering tube 11 extends through the head tube 4 and connects to forks 9 axially below the head tube 4. The forks 9 and steering tube 11 are held in places by a head set 10 engaged about the steering tube 11 above the head tube 4. A stem 20 is located about the steering tube 11 above the head set and extends forwardly to a distal end 21 to which is connected a bicycle handlebar (not shown). Also not shown in the drawings are a seat post and seat which are telescopically received in the top end 13 of the seat tube 5, a crank and sprocket/chain set which is engage with the bottom bracket 8 and wheels rotatably connect at the rear dropout 12 and front dropout 14. The rear wheel is drove from the crank by a chain and sprocket set as is known in the art.

In order to adjust the optimal fit extension for the rider the seat height can be adjusted by telescopically moving the seat post within the seat tube 5 to adjust the seat height. The height and reach of the handlebars is adjustable via the stem 20. The stem 20 comprises a steering tube 11 clamp portion and an extension portion 23. The extension portion 23 is connected with the clamp portion 22 such that the extension portion 23 may be moved pivotally up and down about a connection axis 24 as well as permitting movement of the connection axis longitudinally in a direction A for adjusting the reach of the stem 20. The clamp portion 22 has a circular bore extending about the steering tube 11. The height of the stem 20 can be adjusted by moving the clamping portion of the stem 20 up or down the steering tube 11. When the correct height is reached the clamp portion 22 is secured to the steering tube 11 by fixing means in the form of clamp bolts 25.

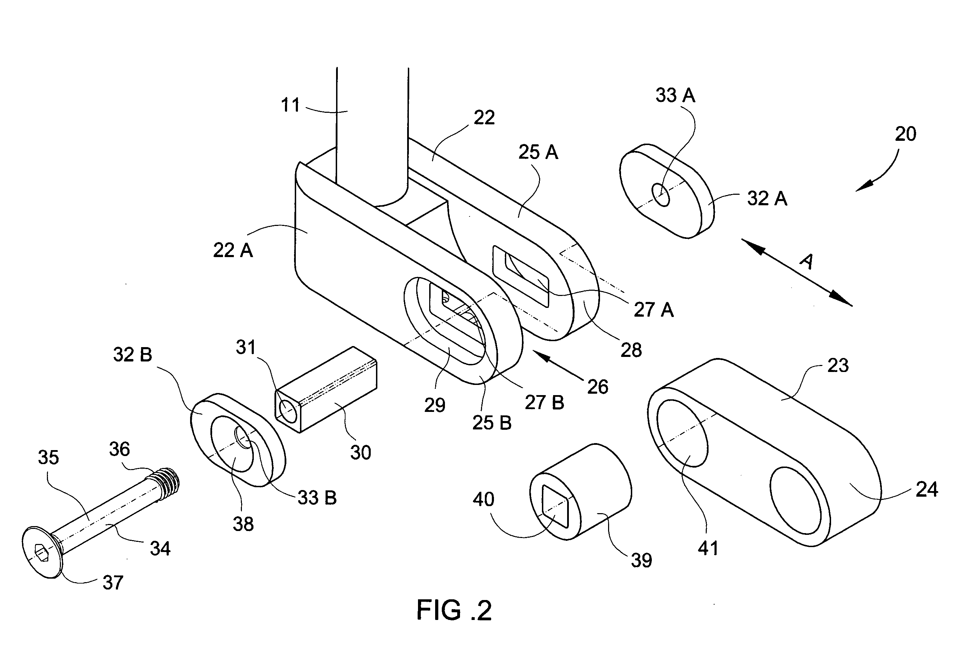

Turning to figure 2, which is an exploded diagram of the stem 20, the internal part of the stem 20 can be seen. The clamp portion 22 of the stem has a pair of forwardly extending parallel arms 25A and 25B. The arms 25A, 25B are spaced apart and parallel to each other and define a receiving space 26 between the arms 25A, 25B. Each arm is provided with an elongate slot 27A, 27B respectively which extends from the distal 28 of the arm 25 towards the body 22A of the clamp 22. The outer surface of each arm 25 includes a recessed portion 29 that is larger than and encompasses the elongate slot 28. The elongate slot 28 is provided with a square ends and thus is in the shape of a rectangular elongate slot 28. A square shaped pin sleeve 30 extends thought the elongate slots 28 between the pair of arms 25 bridging the receiving space 26. At either end the pin sleeve 30 is received within the elongate slot 28 of the respective arms 25. The pin sleeve 30 can slide longitudinally within each slot from a position proximately the distal end 28 of the arms 25 towards the body of the clamp portion 22 (that is to say towards and away from the steering tube 11).

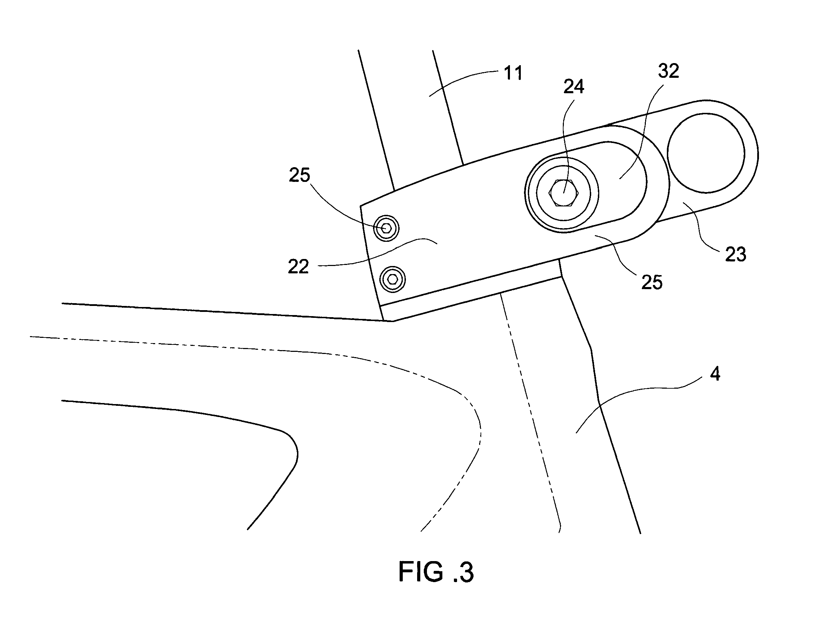

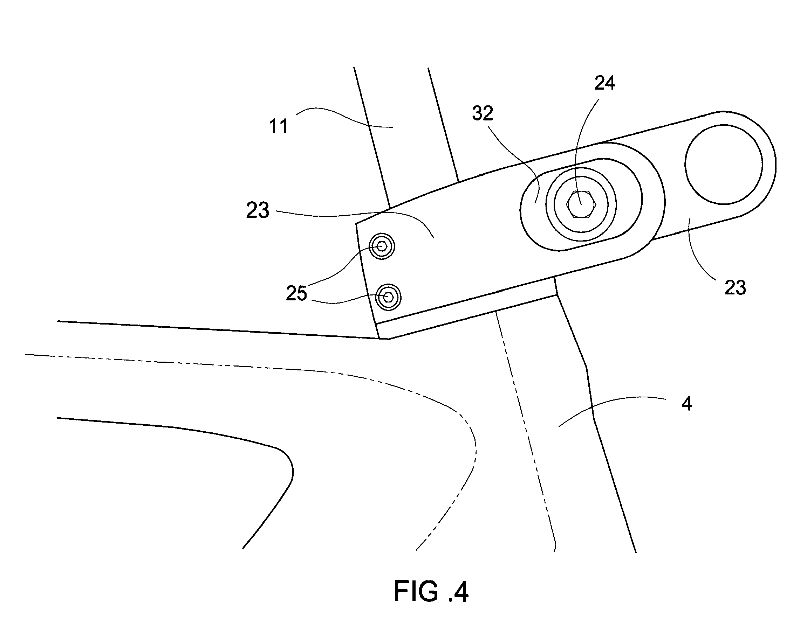

The pin sleeve 30 has an aperture 31 passing through it from end to end. A pair of spacer disks 32A, 32B is provided for location within respective recesses 29 on the outer surface of the arms 25. The spacer disks 32A, 32B have a corresponding apertures 33A, 33B that alien with each other and with aperture 31 of the pin sleeve 30 when the spacer disks are located within the recesses 29. A pin 34 passes through a first one of the spacer disks, through the aperture 31 in the pin sleeve 30 and to the aperture 33 in the second opposite one of the pair of spacer disks 32. The pin 34 may be in the form of a bolt having a smooth shank portion 35 which locates within aperture 31 of pin sleeve 30 and a threaded engagement portion 36 at one and which threadably engages within a first one of the apertures, i.e. 33A, in one of the pair of spacer disks 32. The opposite end of the pin 34 might have a bolt head 37 of a countersunk type that locates within a countersunk recess 38 of the second one of the pair of spacer disks, i.e. 32B. The spacer disks 32A, 32B via the position of the apertures 33A, 33B in the disks set the longitudinal position of the pin 34 and pin sleeve 30 within the elongate slots 27 of arms 25. The pin 34 holds the spacer disks 32A, 32B and pin sleeve 30 in position. In a preferred embodiment of the invention the stem is preferably, although not exclusively, provided with a set of two or more pairs of spacer disks 32 each pair having the aperture 33 in a different longitudinal location of the disks 32 such that by interchanging the spacer disks 32 the longitudinal position of the pin 34 and pin sleeve 30 within the elongate slots 27 of arms 25 can be adjusted towards or away from the steering tube 11. As will be evident changing the longitudinal location of the pin 34 and pin sleeve 30 in this way changes the longitudinal position of the connection axis 24 of the extension member 23 of the stem 20 and thus the reach of the stem 20 between the steering tube 11 and the distal end 21 of the extension portion 23 adjacent where the handlebar is attached. Referring to figure 3 with a first pair of spacer disks 32 the pin 34 is located close to the steering tube 11 such that the stem has a short reach. Referring figure 4 with a second pair of spacer disks 32 the pin 34 is located at a mid point of the elongate slots 27 so that the stem has an intermediate reach. By reversing the first pair of spacer disks of figure 3 the pin can be located within the elongate slots 27 proximate distal 28 of the arms 25 providing the third long reach of the stem 20.

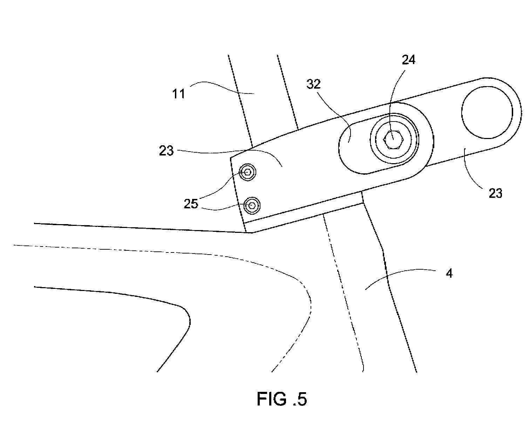

Figure 3 shows a spacer disk 32 with aperture 33 at one end proximal the steering tube 11 to configure the stem in a shorter reach configuration. Figure 4 shows a spacer disk 32 with aperture 33 in the middle of the disk 32 to configure the stem in an intermediate reach configuration. Figure 5 shows a spacer disk 32 with aperture 33 at one end arranged furtherest from the steering tube 11 to configure the stem in a longer reach configuration.

In the preferred embodiment an extension sleeve 39 is located within a bore 41 of the extension 23 and has a square bore 40 through which the square pin sleeve 30 locates. The extension sleeve 39 has an external diameter that is a fit within the interior diameter of the extension bore 41. The external surface of the extension sleeve 39 and the interior surface of the extension bore 41 have cooperating engagements means for rotatably fixing the extension sleeve 39 within the extension bore 41 in one of a plurality of rotational positions. In the preferred embodiment the cooperating engagements means is splines longitudinally along the external surface of the extension sleeve 39 and corresponding splines along the interior surface of the extension bore 41. The extension sleeve 39 can be positioned in one of a plurality of rotational rotations within the extension bore 41 relative to the square bore 40 through the extension sleeve 39. In this way the rotational position of the extension portion 23 in connection with the clamp portion 22 can be adjusted together with the longitudinal reach of the extension portion 23.

## Claims

1. A bicycle stem comprising:
a steering tube clamp, the steering tube claim having a bore for receiving a steer tube and a pair of parallel spaced arms, each arm having an elongate slot at a distal end,
an extension having a proximal end receivable between the arms and a bore extending transversely through the proximal end, and
a pin which in use extends through the elongate slot in each arm and through the bore in the extension for securing the extension to the steering tube clamp, the pin slots and bore being in non-rotational engagement to prevent in use rotation of the extension relative to the clamp, and the pin being selectively movable longitudinally within the slots for adjusting a reach of the extension.

2. The bicycle stem of claim 1 further including a pair of interchangeable spacer disks each having an aperture, the spacer disks cooperating with respective arms and the pin for selectively locating the pin at a longitudinal position within the slots.

3. The bicycle stem of claim 2 wherein the spacer disks are removably received within recesses of respective arms.

4. The bicycle stem of any preceding claim wherein the pin includes a pin sleeve about the pin, the pin sleeve being in the non-rotational engagement with the slots and bore and selectively movable longitudinally within the slots.

5. The bicycle stem of claim 4 wherein the slots and bore have an inner non-circular shape, and the pin sleeve has an outer non-circular shape for non-rotational engagement with the slots and bore.

6. The bicycle stem of claim 4 wherein the non-circular shape is square.

7. The bicycle stem of any one of claims 4-6, wherein the pin sleeve has a circular aperture and the pin is circular for engagement through the pin sleeve.

8. The bicycle stem of any preceding claim further including an extension sleeve removably received in the bore, the extension sleeve have an aperture for receiving the pin though the extension sleeve within the bore.

9. The bicycle stem of claim 8 wherein the extension sleeve and bore are splined for engagement of the extension sleeve and bore at one of a plurality of rotational positions.

10. The bicycle stem of any preceding claim further including a set of two or more pairs of spacer disks, each pair of spacer disks within the set having apertures at different locations, the pairs of spacer disks in the set being interchangeable for selectively locating the pin at different longitudinal positions within the slots.

11. A bicycle stem comprising:
a steering tube clamp, the steering tube claim having a bore for receiving a steer tube and a pair of parallel spaced arms, each arm having an elongate slot at a distal end,
an extension having a proximal end receivable between the arms and a bore extending transversely through the proximal end, and
a pin which in use extends through the elongate slot in each arm and through the bore in the extension for securing the extension to the steering tube clamp, the pin slots and bore being in non-rotational engagement to prevent in use rotation of the extension relative to the clamp, and the pin being selectively movable longitudinally within the slots for adjusting a reach of the extension,
a set of two or more pairs of spacer disks, each pair of spacer disks within the set having apertures at different locations, the pairs of spacer disks in the set interchangeably cooperating with respective arms and the pin for selectively locating the pin at different longitudinal positions within the slots.
